# EUROPÄISCHE PATENTSCHRIFT

(11) **EP 2 812 621 B1**
(45) Veröffentlichungstag und Bekanntmachung des Hinweises auf die Patenterteilung: **14.09.2016**
(21) Anmeldenummer: 13707377.1
(22) Anmeldetag: 01.03.2013
(51) Int. Cl.: F16L 27/08, H02B 5/06, H02B 13/045, H02G 5/06

(54) **ELEKTRISCHE SCHALTANLAGE**
ELECTRICAL SWITCHING SYSTEM
INSTALLATION DE DISTRIBUTION ÉLECTRIQUE

(30) Priorität: 20.03.2012 DE 102012204372
(43) Veröffentlichungstag der Anmeldung: 17.12.2014
(73) Patentinhaber: Siemens Aktiengesellschaft, 80333 München (DE)
(72) Erfinder: RAUTENBERG, Steffen, 12161 Berlin (DE); SCHMIDTKE, Markus, 16540 Hohen Neuendorf (DE)
(86) Internationale Anmeldenummer: PCT/EP2013/054187
(87) Internationale Veröffentlichungsnummer: WO 2013/139574

(56) Entgegenhaltungen:
- EP-A1- 0 161 165
- DE-A1- 2 616 072
- DE-A1- 2 815 587
- DE-A1- 10 032 797
- DE-A1- 19 605 979
- DE-U1- 7 731 063
- DE-U1-202010 006 779
- US-A- 1 304 980

## Beschreibung

Die Erfindung betrifft eine elektrische Schaltanlage umfassend zumindest eine Verbindungsvorrichtung zur Verbindung zweier Rohrleitungsabschnitte von Sammelschienenbausteinen.

Aus der DE 196 05 979 C2 ist ein stromtragfähiges Verbindungselement für Rohrleitungen einer gasisolierten Schaltanlage bekannt. Das Verbindungselement umfasst ein erstes elektrisch leitendes und stromtragfähiges und ein zweites stromtragfähiges rohrförmiges Teilelement. Das erste Teilelement weist an seinem einen Ende einen Teilbereich auf, der von dem zweiten Teilelement überlappt wird. Dabei sind die Längsachsen der beiden Teilelemente in einem von Null verschiedenen Winkel anordbar. Der Teilbereich des ersten Teilelements weist nach außen in Richtung der Innenwand des zweiten Teilelements eine entlang des Außenumfangs verlaufende Wölbung auf, wobei zwischen der Wölbung des ersten Teilelements und der Innenwand des zweiten Teilelements ein stromtragfähiges Kontaktsystem angeordnet ist. Die Teilelemente sind jenseits ihrer Außenwände gemeinsam zumindest in Höhe ihres Überlappungsbereiches von einem gasdichten flexiblen Balg umgeben.

Die DE 100 32 797 A1 beschreibt einen Angularkompensator für eine Kapselung oder einen rohrförmigen Außenleiter einer gasisolierten Hochspannungsanlage. Der Angularkompensator besteht aus zwei mit Abstand zueinander angeordneten, über Laschen drehbeweglich miteinander verbundenen Ringflanschen und aus einem zwischen den Ringflanschen angeordneten und mit den Ringflanschen verbundenen Wellrohr.

Aus der DE 20 2010 006 779 U1 ist ein Angularkompensator bekannt, welcher an einer gasisolierten Hochspannungsanlage Verwendung finden kann, um Winkellagen flexibel auszugleichen. Aus dem deutschen Gebrauchsmuster DE 77 31 063 ist eine Schaltanlage bekannt, welche aneinanderstoßende Flansche aufweist, wobei die Flansche mittels einer V-förmigen Bandschelle verbunden ist. Durch Verwendung eines gummielastischen Dichtringes ist im Rahmen der elastischen Verformbarkeit des Dichtringes ein begrenzter Ausgleich von Winkellagen der aneinanderstoßenden Flansche möglich. Aus der Offenlegungsschrift DE 28 15 587 A1 geht eine Schaltanlage hervor, welche über Flansche verbundene Kapselungsabschnitte aufweist. Die dortigen Flansche sind dabei unter Zwischenlage eines Stützringes gegeneinander gepresst, wobei eine Presskraft durch eine Spannschelle aufgebracht wird.

Der Erfindung liegt die Aufgabe zugrunde, eine elektrische Schaltanlage anzugeben, bei welcher Rohrleitungsabschnitte von Sammelschienenbausteinen winkelstarr verbunden sind und weiter ein Ausgleich eines Versatzes der Rohrleitungsabschnitte ermöglicht ist.

Diese Aufgabe wird erfindungsgemäß durch die im Anspruch 1 angegebenen Merkmale gelöst.

Vorteilhafte Ausgestaltungen der Erfindung sind Gegenstand der Unteransprüche.

Die Verbindungsvorrichtung zur Verbindung zweier Rohrleitungsabschnitte umfasst zumindest zwei ringförmige Rohrflansche.

Erfindungsgemäß weist jeder Rohrflansch eine dem jeweils anderen Rohrflansch zugewandte Innenseite und eine der Innenseite gegenüberliegende Außenseite auf, wobei die Innenseiten jeweils eine Innenquerschnittsfläche umschließen und die Außenseiten jeweils eine Außenquerschnittsfläche umschließen, wobei ein durch den Mittelpunkt der Innenquerschnittsfläche verlaufender erster Normalenvektor parallel mit einem vorgegebenen Abstand zu einem durch den Mittelpunkt der Außenquerschnittsfläche des gleichen Rohrflansches verlaufenden zweiten Normalenvektor ausgerichtet ist, wobei die Rohrflansche an den Innenseiten in einem vorgebbaren Drehwinkel aneinander anliegend befestigbar sind.

Somit sind die parallel zueinander angeordnete Innenquerschnittsfläche und Außenquerschnittsfläche jeweils eines Rohrflansches um den vorgegebenen Abstand in Richtung ihrer Flächenausdehnung zueinander verschoben. In Richtung der Normalenvektoren gesehen ergibt sich daher durch gegenseitige Überdeckung der Innenquerschnittsfläche und der Außenquerschnittsfläche eine gedachte Gesamtfläche mit exzentrischem Querschnitt, wobei sich die Größe der Exzentrizität aus dem Abstand der beiden Normalenvektoren zueinander ergibt.

Aufgrund der aneinander anliegenden Befestigung der Rohrflansche an den Innenseiten in einem vorgebbaren Drehwinkel ermöglicht die erfindungsgemäße Verbindungsvorrichtung in besonders vorteilhafter Weise einen variablen Ausgleich eines vertikalen und horizontalen Achsversatzes zwischen Längsachsen der Rohrleitungsabschnitte. Dabei können Versätze bis zu einer Größe, welche der doppelten Exzentrizität eines Rohrflansches, d. h. dem doppelten Abstand zwischen den beiden Normalenvektoren, entspricht, variabel ausgeglichen werden. Gegenüber aus dem Stand der Technik bekannten Lösungen, bei welchen zwischen zwei Rohrflanschen zusätzlich eine flexible Verbindungskomponente, wie beispielsweise ein Wellrohr oder Schlauch, zur flexiblen Kopplung der Rohrleitungsabschnitte angeordnet ist, weist die erfindungsgemäße Lösung insbesondere weiterhin den Vorteil auf, dass keine zusätzlichen Zuganker zur Stabilisierung der Verbindungsanordnung erforderlich sind. Dies resultiert aus dem Umstand, dass die verbundenen Rohrflansche auftretende Kräfte selbst tragen. Daraus folgend sind ein Material- und Kostenaufwand verringert.

Insbesondere bei einer Anwendung der Verbindungsvorrichtung zur Verbindung von Sammelschienenbausteinen in gasisolierten Schaltanlagen können Versätze zwischen den Sammelschienenbausteinen ausgeglichen werden und diese können in einfacher Weise miteinander verbunden werden. Gleichzeitig werden dabei die auftretenden Gaskräfte von den verbundenen Rohrflanschen selbst getragen, woraus eine sehr kompakte Bauweise der Verbindungsanordnung resultiert und aus zusätzlichen Zugankern oder Kupferschienen-Anbauten resultierende Beeinträchtigungen der benachbarten Sammelschienenbausteine vermieden werden.

Gemäß einer vorteilhaften Ausgestaltung der erfindungsgemäßen Verbindungsvorrichtung ist der Drehwinkel stufenlos vorgebbar. Daraus ergibt sich in besonders vorteilhafter Weise, dass auch der Versatz zwischen den Rohrleitungsabschnitten stufenlos ausgleichbar ist, so dass die Verbindungsvorrichtung einfach und ohne Erzeugung mechanischer Spannungen zwischen den Rohrleitungsabschnitten montierbar ist.

Zum einfachen variablen und insbesondere stufenlosen Ausgleich des Versatzes sieht eine weitere Ausgestaltung der erfindungsgemäßen Verbindungsvorrichtung vor, dass zumindest einer der Rohrflansche als Klemmflansch zur Herstellung einer Klemmverbindung mit einem der Rohrleitungsabschnitte ausgebildet ist. Somit kann die Verbindungsvorrichtung in einfacher Weise vor einer Fixierung durch eine mögliche Drehbewegung des zugehörigen Rohrleitungsabschnittes in dem als Klemmflansch ausgebildeten Rohrflansch in der gewünschten Orientierung ausgerichtet werden.

Zur weiteren Erhöhung der Variabilität sind gemäß einer Ausgestaltung der erfindungsgemäßen Verbindungsvorrichtung beide Rohrflansche als Klemmflansch ausgebildet.

In einer Weiterbildung weisen die Rohrflansche Dichtelemente auf, welche eine fluiddichte Anordnung der Rohrleitungsabschnitte an den Rohrflanschen ermöglichen.

Zur Erzeugung einer dichten Verbindung zwischen den Rohrflanschen und somit zwischen den Rohrleitungsabschnitten umfassen die Innenseiten in einer Ausgestaltung miteinander korrespondierende ringförmige Anlageflächen.

Die Befestigung der Innenseiten aneinander erfolgt kraft-, stoff- und/oder formschlüssig.

Eine zusätzliche oder alternative Ausgestaltung sieht vor, dass zwischen den Innenseiten zumindest ein Dichtelement angeordnet ist, mittels welchem die Fluiddichtigkeit der Verbindung zwischen den Rohrflanschen erzeugt wird.

Gemäß einer zweckmäßigen Ausgestaltung sind die Rohrflansche aus einem elektrisch leitfähigen Material gebildet, wobei die Innenseiten der Rohrflansche elektrisch leitend miteinander verbunden sind. Somit sind die Rohrflansche und daraus folgend die Verbindungsvorrichtung stromtragfähig.

In einer weiteren Ausführung umfassen auch die Außenseiten jeweils eine ringförmige Anlagefläche, an welcher die Rohrleitungsabschnitte fluiddicht befestigbar sind.

Die erfindungsgemäße elektrische Schaltanlage umfasst zumindest eine erfindungsgemäße Verbindungsvorrichtung oder eine Weiterbildung dieser. Die kompakte Ausführung der Verbindungsvorrichtung ermöglicht, dass zu verbindende Komponenten der Schaltanlage in geringem Abstand zueinander positioniert werden können, woraus sich wiederum ein kompakter Aufbau der elektrischen Schaltanlage ergibt. Weiterhin folgt aus der Verringerung des Kostenaufwandes bei der Herstellung und Montage der Verbindungsvorrichtung ein verringerter Montage- und Kostenaufwand bei der Herstellung und Wartung der elektrischen Schaltanlage.

Gemäß einer Ausgestaltung der erfindungsgemäßen elektrischen Schaltanlage handelt es sich bei dieser um eine gasisolierte Schaltanlage. Mittels der Verbindungsvorrichtung ist es möglich, Versätze zwischen den Sammelschienenbausteinen variabel auszugleichen. Weiterhin sind die Sammelschienenbausteine in einfacher Weise miteinander verbindbar. Gleichzeitig werden auftretende Gaskräfte von den verbundenen Rohrflanschen selbst getragen, woraus die sehr kompakte Bauweise der Verbindungsanordnung resultiert und durch Zuganker oder Kupferschienen-Anbauten verursachte Beeinträchtigungen der benachbarten Sammelschienenbausteine vermieden werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden.

Dabei zeigen:
- Figur 1: schematisch eine Schnittdarstellung der Verbindungsvorrichtung bei einer ersten Anordnung von Rohrflanschen zueinander,
- Figur 2: schematisch ein perspektivisches Ersatzschaltbild der Verbindungsvorrichtung gemäß Figur 1, wobei die Rohrflansche durch eine Kurbelanordnung dargestellt sind,
- Figur 3: schematisch eine Schnittdarstellung der Verbindungsvorrichtung bei einer zweiten Anordnung von Rohrflanschen zueinander,
- Figur 4: schematisch ein perspektivisches Ersatzschaltbild der Verbindungsvorrichtung gemäß Figur 3, wobei die Rohrflansche durch eine Kurbelanordnung dargestellt sind,
- Figur 5: schematisch eine Schnittdarstellung der Verbindungsvorrichtung bei einer dritten Anordnung von Rohrflanschen zueinander,
- Figur 6: schematisch ein perspektivisches Ersatzschaltbild der Verbindungsvorrichtung gemäß Figur 5, wobei die Rohrflansche durch eine Kurbelanordnung dargestellt sind,
- Figur 7: schematisch eine perspektivische Darstellung eines Teilschnittes der Verbindungsvorrichtung bei einer vierten Anordnung von Rohrflanschen zueinander,
- Figur 8: schematisch eine Darstellung zur Ermittlung eines erforderlichen Drehwinkels zwischen den Rohrflanschen zum Einstellen eines gewünschten Achsversatzes gemäß der vierten Anordnung der Rohrflansche zueinander,
- Figur 9: schematisch eine perspektivische Darstellung eines Teilschnittes der Verbindungsvorrichtung bei einer fünften Anordnung von Rohrflanschen zueinander,
- Figur 10: schematisch eine Darstellung zur Ermittlung eines erforderlichen Drehwinkels zwischen den Rohrflanschen zum Einstellen eines gewünschten Achsversatzes gemäß der fünften Anordnung der Rohrflansche zueinander und
- Figur 11: schematisch eine erfindungsgemäße elektrische Schaltanlage, welche eine Verbindungsvorrichtung umfasst.

Einander entsprechende Teile sind in allen Figuren mit den gleichen Bezugszeichen versehen.

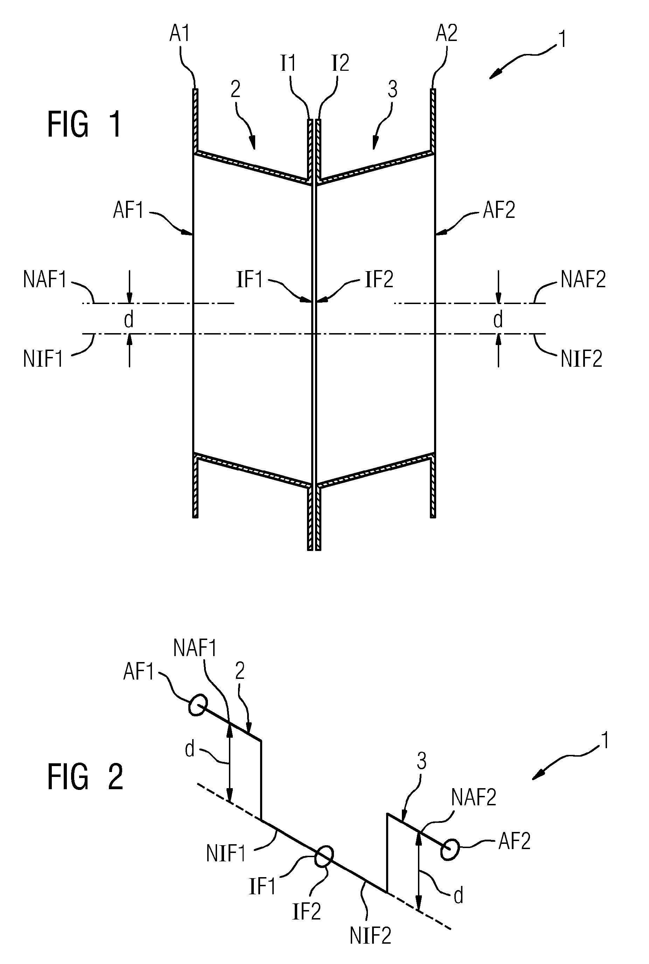

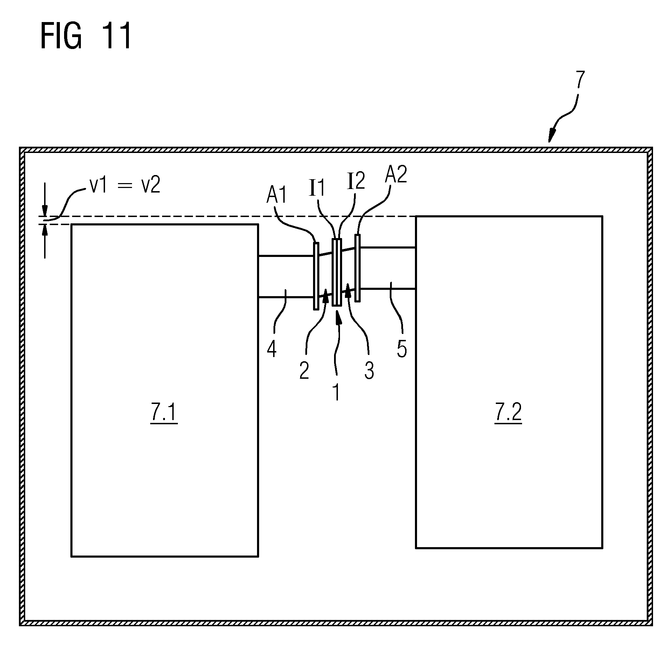

In Figur 1 ist ein mögliches Ausführungsbeispiel der Verbindungsvorrichtung 1 zur Verbindung zweier in Figur 11 näher dargestellter Rohrleitungsabschnitte 4, 5 dargestellt.

Die Verbindungsvorrichtung 1 umfasst zwei ringförmige, an ihren Innenseiten I1, I2 aneinander befestigte Rohrflansche 2, 3. Die Befestigung erfolgt kraft-, form- und/oder stoffschlüssig durch Verschweißen, Verlöten, Verkleben, Vernieten, Verschrauben, Verpressen, Verklemmen und/oder korrespondierende Umformungen der Innenseiten I1, I2.

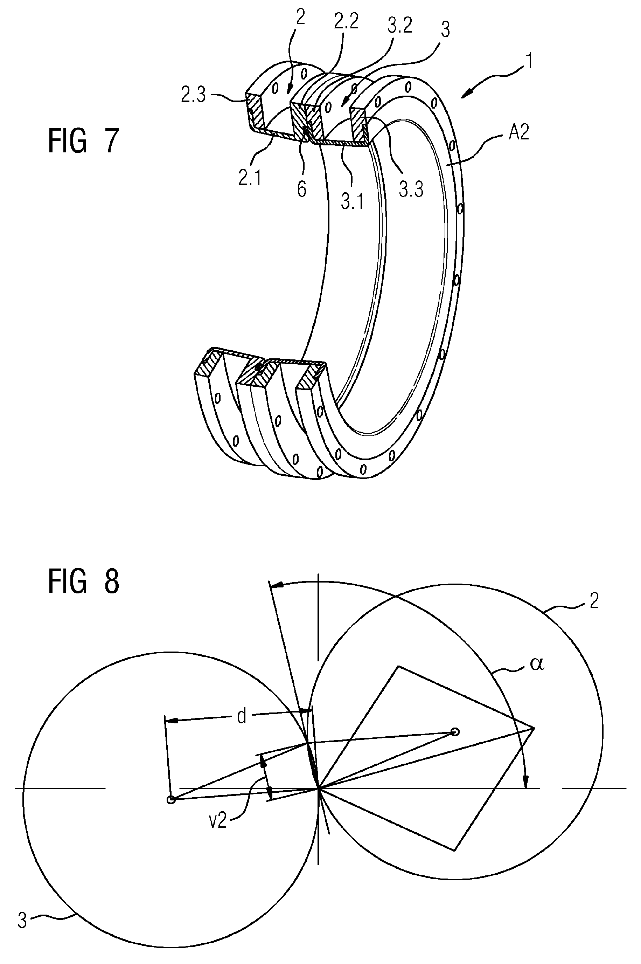

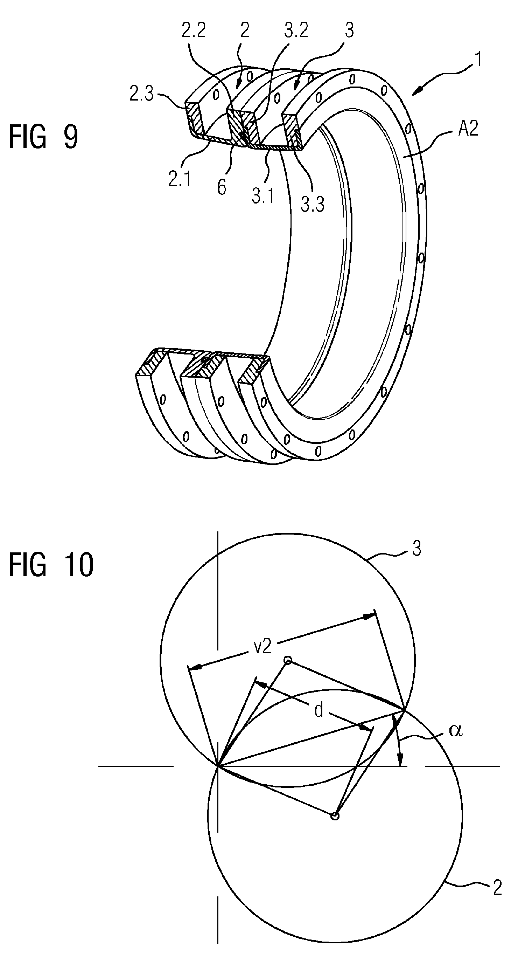

Die Innenseiten I1, I2 umfassen miteinander korrespondierende ringförmige Anlageflächen, wobei zwischen den Anlageflächen der Innenseiten I1, I2 ein in den Figuren 7 und 9 näher dargestelltes Dichtelement 6 angeordnet ist.

Die Innenseiten I1, I2 umschließen dabei ringförmig eine runde Innenquerschnittsfläche IF1, IF2.

Weiterhin weist jeder Rohrflansch 2, 3 jeweils eine der Innenseite I1, I2 gegenüberliegende Außenseite A1, A2 auf, welche jeweils eine runde Außenquerschnittsfläche AF1, AF2 ringförmig umschließen. Auch die Außenseiten A1, A2 umfassen jeweils eine ringförmige Anlagefläche.

Die Außenquerschnittsflächen AF1, AF2 sind zur jeweils zugehörigen Innenquerschnittsfläche IF1, IF2 derart verschoben, dass ein durch den Mittelpunkt der Innenquerschnittsfläche IF1, IF2 verlaufender erster Normalenvektor NIF1, NIF2 parallel mit einem vorgegebenen Abstand d zu einem durch den Mittelpunkt der Außenquerschnittsfläche AF1, AF2 des gleichen Rohrflansches 2, 3 verlaufenden zweiten Normalenvektor NAF1, NAF2 ausgerichtet ist. In nicht gezeigten Ausführungsbeispielen weisen die Rohrflansche 2, 3 unterschiedliche Abstände d zwischen dem ersten Normalenvektor NIF1, NIF2 und dem zweiten Normalenvektor NAF1, NAF2 auf.

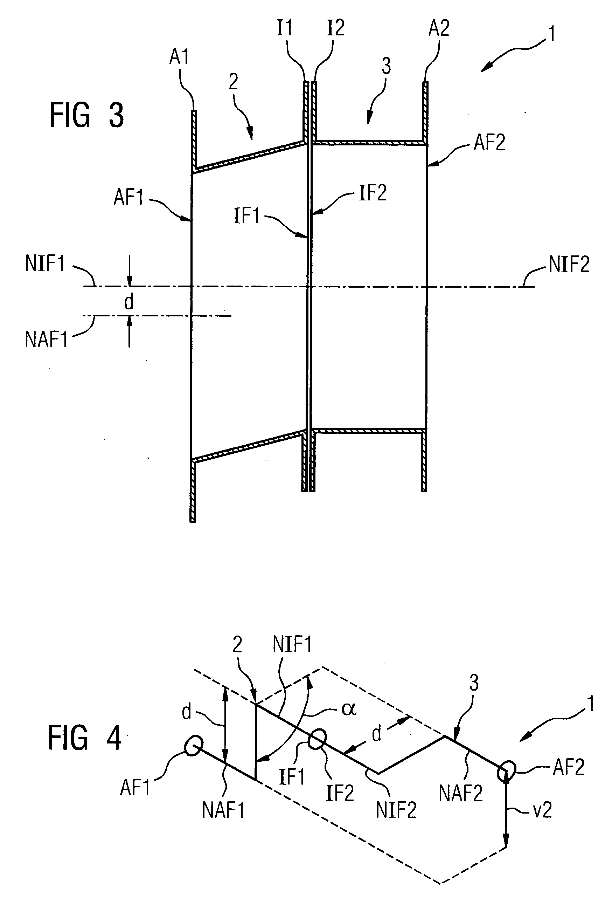

Die Rohrflansche 2, 3 sind an den Innenseiten I1, I2 in einem vorgebbaren, in den Figuren 4, 6, 8 und 10 näher dargestellten Drehwinkel α aneinander anliegend befestigbar.

Um einen in Figur 11 näher dargestellten vertikalen und/oder horizontalen Versatz v1 zwischen den zwei Rohrleitungsabschnitten 4, 5 auszugleichen, sind die Rohrflansche 2, 3 im nicht montierten Zustand in einem beliebigen Drehwinkel α zueinander um den ersten Normalenvektor NIF1, NIF2 drehbar.

Dabei wird zunächst der Versatz v1 zwischen den Rohrleitungsabschnitten 4, 5 ermittelt. Anschließend werden die Rohrflansche 2, 3 solange relativ zueinander um den Drehwinkel α verdreht, bis ein gewünschter dem Versatz v1 entsprechender Versatz v2 zwischen dem zweiten Normalenvektor NAF1 der Außenquerschnittsfläche AF1 des einen Rohrflansches 2 und dem zweiten Normalenvektor NAF2 der Außenquerschnittsfläche AF2 des anderen Rohrflansches 3 eingestellt ist. Je nach gewählter Art der Befestigung der Innenseite I1, I2 aneinander ist dabei eine stufenlose oder eine gestufte Vorgabe des Drehwinkels α möglich.

Insbesondere bei einer Verschraubung oder Vernietung der Innenseiten I1, I2, welche durch vorgegebene Bohrungen in den Innenseiten I1, I2 erfolgt, ist eine gestufte Vorgabe möglich, wobei die Größe der Stufen durch einen Abstand zwischen den einzelnen Bohrungen bestimmt ist.

Bei den verbleibenden genannten kraft-, stoff- und/oder formschlüssigen Befestigungen ist eine stufenlose Vorgabe des Drehwinkels α möglich.

Anschließend werden die Rohrflansche 2, 3 in der eingestellten relativen Position aneinander befestigt und zwischen den Rohrleitungsabschnitten 4, 5 angeordnet.

Bei den Rohrflanschen 2, 3 handelt es sich um so genannte Klemmflansche, an welchen die Rohrleitungsabschnitte 4, 5 durch eine Klemmverbindung befestigt werden. Vor der Klemmung sind die Rohrleitungsabschnitte 4, 5 an oder in den Rohrflanschen 2, 3 frei drehbar. Dadurch ist ein variabler und stufenloser Ausgleich des Versatzes v1 möglich. Nach Anordnung und Ausrichtung der Rohrleitungsabschnitte 4, 5 relativ zu den Rohrflanschen 2, 3 erfolgt die Realisierung der Klemmverbindung in der gewünschten Position.

Zur Herstellung einer fluiddichten Verbindung zwischen den Rohrflanschen 2, 3 und den Rohrleitungsabschnitten 4, 5 weisen die Rohrflansche 2, 3 in nicht näher dargestellter Weise Dichtelemente auf oder es werden zwischen den Rohrflanschen 2, 3 und den Rohrleitungsabschnitten 4, 5 Dichtelemente angeordnet.

Im dargestellten Ausführungsbeispiel sind die Rohrflansche 2, 3 derart zueinander angeordnet, dass der Drehwinkel α und der Versatz v2 Null sind. Diese Anordnung der Rohrflansche 2, 3 ist für Anwendungsfälle vorgesehen, in welchen der Versatz v1 zwischen den Rohrleitungsabschnitten 4, 5 ebenfalls Null ist.

Figur 2 zeigt ein Ersatzschaltbild der Verbindungsvorrichtung 1 gemäß Figur 1. Dabei sind die Rohrflansche 2, 3 durch eine Kurbelanordnung dargestellt. Die Kurbelanordnung verdeutlicht, dass beide Rohrflansche 2, 3 zwischen den ersten Normalenvektoren NIF1, NIF2 ihrer Innenquerschnittsflächen IF1, IF2 und den zweiten Normalenvektoren NAF1, NAF2 ihrer Außenquerschnittsflächen AF1, AF2 den Abstand d aufweisen.

Im dargestellten Ausführungsbeispiel ist der Drehwinkel α zwischen den Rohrflanschen 2, 3 Null. Daraus resultiert, dass die zweiten Normalenvektoren NAF1, NAF2 der Außenquerschnittsflächen AF1, AF2 ohne Versatz v2 zueinander angeordnet sind. Das heißt, die zweiten Normalenvektoren NAF1, NAF2 sind in einer Flucht angeordnet.

In Figur 3 ist die Verbindungsvorrichtung 1 dargestellt, wobei im Unterschied zu Figur 1 die Rohrflansche 2, 3 um einen Drehwinkel α von 90° zueinander verdreht sind. Daraus ergibt sich ein in Figur 4 dargestellter Versatz v2 zwischen den zweiten Normalenvektoren NAF1, NAF2 der Außenquerschnittsflächen AF1, AF2.

Figur 4 zeigt das Ersatzschaltbild der Verbindungsvorrichtung 1 gemäß Figur 3.

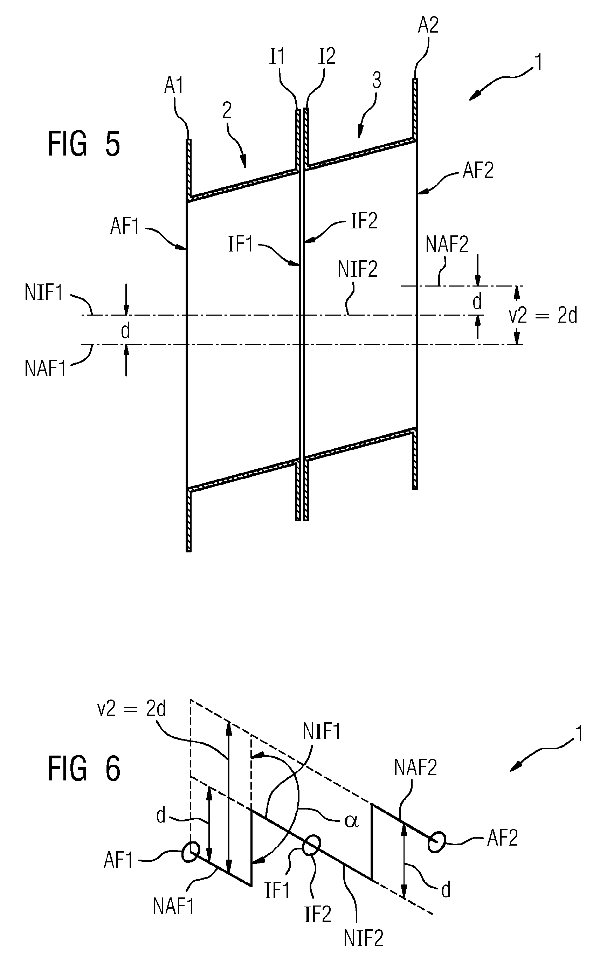

In Figur 5 ist die Verbindungsvorrichtung 1 dargestellt, wobei im Unterschied zu Figur 1 die Rohrflansche 2, 3 um einen Drehwinkel α von 180° zueinander verdreht sind. Daraus ergibt sich ein maximaler Versatz v2 zwischen den zweiten Normalenvektoren NAF1, NAF2 der Außenquerschnittsflächen AF1, AF2, wobei der Versatz v2 dem zweifachen Abstand d entspricht. Figur 6 zeigt das Ersatzschaltbild der Verbindungsvorrichtung 1 gemäß Figur 5.

In den Figuren 1 bis 6 ist die Verbindungsvorrichtung 1 unter Einstellung drei verschiedener Drehwinkel α zwischen den Rohrflanschen 2, 3 mit den Werten 0°, 90° und 180° und daraus resultierenden Versätzen v2 dargestellt. Um davon abweichende horizontale und/oder vertikale Versätze v2 einzustellen, ist der Drehwinkel α stufenlos oder in Stufen im Bereich 0° bis 360 einstellbar.

Figur 7 zeigt die Verbindungsvorrichtung 1 in einem perspektivischen Teilschnitt, wobei die Rohrflansche 2, 3 derart zueinander angeordnet sind, dass ein Versatz v2 von 5 mm erzeugt wird. Dabei beträgt der Abstand d zwischen den ersten Normalenvektoren NIF1, NIF2 der Innenquerschnittsflächen IF1, IF2 und den zweiten Normalenvektoren NAF1, NAF2 der Außenquerschnittsflächen AF1, AF2 der beiden Rohrflansche 2, 3 15 mm. In nicht gezeigten Ausführungsbeispielen sind abweichende Werte des Abstands d möglich.

Die Rohrflansche 2, 3 sind in der dargestellten Weise jeweils aus einem Innenelement 2.1, 3.1 und zwei Außenelementen 2.2, 2.3, 3.2, 3.3 gebildet.

Bei dem Rohrflansch 2 sind das Innenelement 2.1, welches die Innenquerschnittsfläche IF1 und die Außenquerschnittsfläche AF1 begrenzt, und ein Außenelement 2.2 als ein gemeinsames Bauteil einstückig ausgebildet. Das Außenelement 2.2 weist dabei die ringförmige Anlagefläche auf, wobei in die Anlagefläche eine umlaufende Nut eingebracht ist, in welcher das Dichtelement 6 formschlüssig angeordnet ist.

Das Innenelement 2.1 weist an einer der Außenseite A1 zugewandten Randseite einen umlaufenden Steg auf. In eine Anlagefläche des zweiten Außenelementes 2.3 ist eine zu dem Steg korrespondierend ausgebildete Materialaussparung eingebracht, in welcher der Steg bündig mit der Anlagefläche angeordnet ist.

Bei dem Rohrflansch 3 weist das Innenelement 3.1, welches die Innenquerschnittsfläche IF2 und die Außenquerschnittsfläche AF2 begrenzt, einen U-förmigen Querschnitt mit zwei an den Randseiten umlaufenden Stegen auf. In jeweils eine Anlagefläche der Außenelemente 3.2, 3.3 sind zu den Stegen korrespondierend ausgebildete Materialaussparungen eingebracht, in welchen die Stege bündig mit der Anlagefläche angeordnet sind.

Die Innenelemente 2.1, 3.1 zeichnen sich gegenüber den Außenelementen 2.2, 2.3, 3.2, 3.3 durch eine geringere Materialstärke aus.

Die Ermittlung des erforderlichen Drehwinkels α zur Einstellung kann über verschiedene Rechenmodelle erfolgen.

In Figur 8 ist eine Darstellung zur Ermittlung des erforderlichen Drehwinkels α zwischen den Rohrflanschen 2, 3 zum Einstellen des gewünschten Versatzes v2 von 5 mm gemäß der in Figur 7 gezeigten Anordnung der Rohrflansche 2, 3 dargestellt.

Eine im Wesentlichen in vertikaler Richtung verlaufende Diagonale des Parallelogramms bestimmt den Versatz v2, wobei zur Einstellung des Versatzes v2 von 5 mm ein Drehwinkel α von 103° erforderlich ist.

Figur 9 zeigt die Verbindungsvorrichtung 1 gemäß Figur 7 in einem perspektivischen Teilschnitt, wobei die Rohrflansche 2, 3 derart zueinander angeordnet sind, dass ein Versatz v2 von 23 mm erzeugt wird. Dabei beträgt der Abstand d ebenfalls jeweils 15 mm.

In Figur 10 ist die Darstellung zur Ermittlung des erforderlichen Drehwinkels α zwischen den Rohrflanschen 2, 3 zum Einstellen des gewünschten Versatzes v2 von 23 mm gemäß der in Figur 9 gezeigten Anordnung der Rohrflansche 2, 3 dargestellt.

Eine im Wesentlichen in horizontaler Richtung verlaufende Diagonale des Parallelogramms bestimmt den Versatz v2, wobei zur Einstellung des Versatzes v2 von 23 mm ein Drehwinkel α von 16° erforderlich ist.

Weiterhin besteht die Möglichkeit, den Versatz v2 sowie die zugehörige Einstellung der Rohrflansche 2, 3 anhand von zwei kartesischen Koordinaten zu beschreiben.

Figur 11 zeigt eine erfindungsgemäße elektrische Schaltanlage 7 mit zwei Sammelschienenbausteinen 7.1, 7.2. Jeder Sammelschienenbaustein 7.1 7.2 umfasst einen Rohrleitungsabschnitt 4, 5, wobei die Sammelschienenbausteine 7.1, 7.2 und somit die zugehörigen Rohrleitungsabschnitte 4, 5 mit einem Versatz v1 zueinander angeordnet sind.

Zum Ausgleich des Versatzes v1 ist zwischen den Rohrleitungsabschnitten 4, 5 die Verbindungsvorrichtung 1 angeordnet, wobei zwischen den zweiten Normalenvektoren NAF1, NAF2 der Außenquerschnittsflächen AF1, AF2 der beiden Rohrflansche 2, 3 der Versatz v2 eingestellt wird. Dabei entspricht der Versatz v2 dem Versatz v1.

Bei der elektrischen Schaltanlage 7 handelt es sich um eine gasisolierte Schaltanlage, wobei die Verbindungsvorrichtung 1 und die Verbindung zwischen der Verbindungsvorrichtung 1 und den Rohrleitungsabschnitten 4, 5 gasdicht ausgebildet ist.

Dabei sind die Rohrflansche 2, 3 aus einem elektrisch leitfähigen Material gebildet, wobei die Innenseiten I1, I2 der Rohrflansche 2, 3 elektrisch leitend miteinander verbunden sind.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Schaltanlage (7) umfassend zumindest eine Verbindungsvorrichtung (1) zur Verbindung zweier Rohrleitungsabschnitte (4, 5) von Sammelschienenbausteinen, umfassend zumindest zwei ringförmige Rohrflansche (2, 3),
**dadurch gekennzeichnet,**
**dass** jeder Rohrflansch (2, 3) eine dem jeweils anderen Rohrflansch (2, 3) zugewandte Innenseite (I1, I2) und eine der Innenseite (I1, I2) gegenüberliegende Außenseite (A1, A2) aufweist, wobei die Innenseiten (I1, 12) jeweils eine Innenquerschnittsfläche (IF1, IF2) umschließen und die Außenseiten (A1, A2) jeweils eine
Außenquerschnittsfläche (AF1, AF2) umschließen, wobei ein durch den Mittelpunkt der Innenquerschnittsfläche (IF1, IF2) verlaufender erster Normalenvektor (NIF1, NIF2) parallel mit einem vorgegebenen Abstand (d) zu einem durch den Mittelpunkt der Außenquerschnittsfläche (AF1, AF2) des gleichen Rohrflansches (2, 3) verlaufenden zweiten Normalenvektor (NAF1, NAF2) ausgerichtet ist, wobei die Rohrflansche (2, 3) an den Innenseiten (I1, 12) in einem vorgebbaren Drehwinkel (α) aneinander anliegend befestigbar sind.

2. Elektrische Schaltanlage (7) umfassend zumindest eine Verbindungsvorrichtung (1) nach Anspruch 1,
**dadurch gekennzeichnet,**
**dass** der Drehwinkel (α) stufenlos vorgebbar ist.

3. Elektrische Schaltanlage (7) umfassend zumindest eine Verbindungsvorrichtung (1) nach Anspruch 1 oder 2,
**dadurch gekennzeichnet,**
**dass** zumindest einer der Rohrflansche (2, 3) als Klemmflansch zur Herstellung einer Klemmverbindung mit einem Rohrleitungsabschnitt (4, 5) ausgebildet ist.

4. Elektrische Schaltanlage (7) umfassend zumindest eine Verbindungsvorrichtung (1) nach einem der vorhergehenden Ansprüche,
**dadurch gekennzeichnet,**
**dass** die Rohrflansche (2, 3) Dichtelemente zur fluiddichten Anordnung der Rohrleitungsabschnitte (4, 5) aufweisen.

5. Elektrische Schaltanlage (7) umfassend zumindest eine Verbindungsvorrichtung (1) nach einem der vorhergehenden Ansprüche,
**dadurch gekennzeichnet,**
**dass** die Innenseiten (I1, 12) miteinander korrespondierende ringförmige Anlageflächen umfassen.

6. Elektrische Schaltanlage (7) umfassend zumindest eine Verbindungsvorrichtung (1) nach einem der vorhergehenden Ansprüche,
**dadurch gekennzeichnet,**
**dass** die Befestigung der Innenseiten (I1, I2) aneinander kraft-, stoff- und/oder formschlüssig ist.

7. Elektrische Schaltanlage (7) umfassend zumindest eine Verbindungsvorrichtung (1) nach einem der vorhergehenden Ansprüche,
**dadurch gekennzeichnet,**
**dass** zwischen den Innenseiten (I1, I2) zumindest ein Dichtelement (6) angeordnet ist.

8. Elektrische Schaltanlage (7) umfassend zumindest eine Verbindungsvorrichtung (1) nach einem der vorhergehenden Ansprüche,
**dadurch gekennzeichnet,**
**dass** die Rohrflansche (2, 3) aus einem elektrisch leitfähigen Material gebildet sind, wobei die Innenseiten (I1, I2) der Rohrflansche (2, 3) elektrisch leitend miteinander verbunden sind.

9. Elektrische Schaltanlage (7) umfassend zumindest eine Verbindungsvorrichtung (1) nach einem der vorhergehenden Ansprüche,
**dadurch gekennzeichnet,**
**dass** die Außenseiten (A1, A2) jeweils eine ringförmige Anlagefläche umfassen.

10. Elektrische Schaltanlage (7) umfassend zumindest eine Verbindungsvorrichtung (1) nach Anspruch 1 bis 9,
**dadurch gekennzeichnet,**
**dass** die elektrische Schaltanlage (7) eine gasisolierte Schaltanlage ist.

## Claims

1. Electrical switchgear (7) comprising at least one connecting device (1) for connecting two pipeline sections (4, 5) of busbar components, comprising at least two annular pipe flanges (2, 3), **characterized in that** each pipe flange (2, 3) has an inner side (I1, I2), which faces the respectively other pipe flange (2, 3), and a outer side (A1, A2) which is situated opposite the inner side (I1, I2), wherein the inner sides (I1, I2) each surround an inner cross-sectional area (IF1, IF2), and the outer sides (A1, A2) each surround an outer cross-sectional area (AF1, AF2), wherein a first normal vector (NIF1, NIF2), which runs through the center point of the inner cross-sectional area (IF1, IF2), is oriented parallel to and at a prespecified distance (d) from a second normal vector (NAF1, NAF2) which runs through the center point of the outer cross-sectional area (AF1, AF2) of the same pipe flange (2, 3), wherein the pipe flanges (2, 3) can be fastened on the inner sides (I1, I2) at a prespecifiable rotation angle (α) such that they bear one against the other.

2. Electrical switchgear (7) comprising at least one connecting device (1) according to Claim 1,
**characterized in that** the rotation angle (α) can be prespecified in a continuously variable manner.

3. Electrical switchgear (7) comprising at least one connecting device (1) according to Claim 1 or 2,
**characterized in that** at least one of the pipe flanges (2, 3) is in the form of a clamping flange for establishing a clamping connection to a pipeline section (4, 5).

4. Electrical switchgear (7) comprising at least one connecting device (1) according to one of the preceding claims, **characterized in that** the pipe flanges (2, 3) have sealing elements for fluid-tight arrangement of the pipeline sections (4, 5).

5. Electrical switchgear (7) comprising at least one connecting device (1) according to one of the preceding claims, **characterized in that** the inner sides (I1, I2) comprise annular bearing surfaces which correspond to one another.

6. Electrical switchgear (7) comprising at least one connecting device (1) according to one of the preceding claims, **characterized in that** the inner sides (I1, I2) are fastened to one another in a force-fitting, cohesive and/or interlocking manner.

7. Electrical switchgear (7) comprising at least one connecting device (1) according to one of the preceding claims, **characterized in that** at least one sealing element (6) is arranged between the inner sides (I1, I2).

8. Electrical switchgear (7) comprising at least one connecting device (1) according to one of the preceding claims, **characterized in that** the pipe flanges (2, 3) are formed from an electrically conductive material, wherein the inner sides (I1, I2) of the pipe flanges (2, 3) are electrically conductively connected to one another.

9. Electrical switchgear (7) comprising at least one connecting device (1) according to one of the preceding claims, **characterized in that** the outer sides (A1, A2) each comprise an annular bearing surface.

10. Electrical switchgear (7) comprising at least one connecting device (1) according to Claims 1 to 9, **characterized in that** the electrical switchgear (7) is a gas-insulated switchgear.

## Revendications

1. Installation (7) de distribution électrique comprenant au moins un dispositif (1) de liaison pour relier deux tronçons (4, 5) tubulaires de modules de barres collectrices, comprenant au moins deux brides (2, 3) tubulaires annulaires,
**caractérisée**
**en ce que** chaque bride (2*,* 3) tubulaire a un côté (I1, I2) intérieur tourné vers respectivement l'autre bride (2, 3) tubulaire et un côté (A1, A2) extérieur opposé au côté (I1, I2) intérieur, les côtés (I1, I2) intérieurs entourant respectivement une surface (IF1, IF2) de section transversale intérieure et les côtés (A1, A2) entourant respectivement une surface (AF1, AF2) de section transversale extérieure, un premier vecteur (NIF1, NIF2) normal passant par le centre de la surface (IF1, IF2) de section transversale intérieure étant dirigé parallèlement à une distance (d) donnée à l'avance d'un deuxième vecteur (NAF1, NAF2) normal passant par le centre de la surface (AF1, AF2) de section transversale extérieure de la même bride (2, 3) tubulaire, les brides (2, 3) tubulaires pouvant être fixées en s'appliquant l'une à l'autre suivant un angle (α) de rotation pouvant être donné à l'avance aux côtés (I1, I2) intérieurs.

2. Installation (7) de distribution électrique comprenant au moins un dispositif (1) de liaison suivant la revendication 1,
**caractérisée**
**en ce que** l'angle (α) de rotation peut être donné à l'avance d'une manière continue.

3. Installation (7) de distribution électrique comprenant au moins un dispositif (1) de liaison suivant la revendication 1 ou 2,
**caractérisée**
**en ce qu'**au moins l'une des brides (2, 3) annulaires est constituée sous la forme d'une bride de serrage pour ménager un serrage avec un tronçon (4, 5) de ligne tubulaire.

4. Installation (7) de distribution électrique comprenant au moins un dispositif (1) de liaison suivant l'une des revendications précédentes,
**caractérisée**
**en ce que** les brides (2, 3) tubulaires ont des éléments d'étanchéité pour l'agencement d'une manière étanche au fluide des tronçons (4, 5) de ligne tubulaire.

5. Installation (7) de distribution électrique comprenant au moins un dispositif (1) de liaison suivant l'une des revendications précédentes,
**caractérisée**
**en ce que** les côtés (I1, I2) intérieurs comprennent des surfaces de contact annulaires se correspondant l'une à l'autre.

6. Installation (7) de distribution électrique comprenant au moins un dispositif (1) de liaison suivant l'une des revendications précédentes,
**caractérisée**
**en ce que** la fixation des côtés (I1, I2) intérieurs l'un à l'autre est à complémentarité de force, de matière et/ou de forme.

7. Installation (7) de distribution électrique comprenant au moins un dispositif (1) de liaison suivant l'une des revendications précédentes,
**caractérisée**
**en ce qu'**au moins un élément (6) d'étanchéité est disposé entre les côtés (I1, I2) intérieurs.

8. Installation (7) de distribution électrique comprenant au moins un dispositif (1) de liaison suivant l'une des revendications précédentes,
**caractérisée**
**en ce que** les brides (2, 3) annulaires sont en un matériau conducteur de l'électricité, les côtés (I1, I2) intérieurs des brides (2, 3) annulaires étant reliés entre elles d'une manière conductrice de l'électricité.

9. Installation (7) de distribution électrique comprenant au moins un dispositif (1) de liaison suivant l'une des revendications précédentes,
**caractérisée**
**en ce que** les côtés (A1, A2) extérieurs comprennent respectivement une surface de contact annulaire.

10. Installation (7) de distribution électrique comprenant au moins un dispositif (1) de liaison suivant l'une des revendications 1 à 9,
**caractérisée**
**en ce que** l'installation (7) de distribution électrique est une installation de distribution à isolation par du gaz.
